# EUROPEAN PATENT APPLICATION

(11) **EP 0 911 626 A1**
(43) Date of publication of application: **28.04.1999**
(21) Application number: 98308418.7
(22) Date of filing: 15.10.1998
(51) Int. Cl.: G01N 23/223

(54) **Article identification means**

(30) Priority: 25.10.1997 GB 9722475
(71) Applicant: The Wahoo Trust, Guernsey, Channel Islands (GB)
(72) Inventor: Thebock, Peter, The University of Natal, Durban, Kwa Zulu Natal (ZA); Hils, Peter, 77761 Schiltach (DE); Damjanovic, Daniel, Kloof, Kwa Zulu Natal (ZA)
(74) Representative: Downing, Michael Philip

(57) **Abstract**

A method is provided of immediate identification of an article such as a vehicle. The article has incorporated into it or into its coating, two or more substances detectable by X-ray spectroscopy and these constitute a sort of bar code readable by the spectrometer both qualitatively and quantitatively. Other spectrographic methods may be used such as NMR, NEDS, electron spin resonance.

## Description

### FIELD OF THE INVENTION

This invention relates to article identification means and is particularly useful as means for identifying vehicles, TV sets and other articles subject to possible theft.

### BACKGROUND OF THE INVENTION

The incidence of motor vehicle and household appliance theft continues to rise despite the introduction of novel and ingenious devices. Such devices are commonly known as electronic tags or active or passive integrated RF chips, which, by their very nature, can be detected, read out and located. Since organised crime syndicates nowadays have best scientific resources, it is very likely, that part of their action during the committal of the crime is the removal and destruction of such devices or electronic units built into their bounty. The average disassembly of a motor vehicle into its major components from the time of its theft takes a time that short and can be done while transported. In the same time the electronic tracking device can be disposed of. The components of such a vehicle can then emerge on the used spare parts market and, unless somehow marked and identifiable, it is very difficult to prove, that they are stolen goods. The same scenario is valid for any household appliance, jewellery, gemstones and the like. Engraved identification numbers or codes are currently artfully removed and replaced, so that it is, however, possible to allege, that they might be stolen, but a reliable back-tracking to the rightful owner or insurer is almost impossible. Hence, it is common practice for victims of movable property crime to claim from the insurers, and the law enforcement authorities dispose of impounded stolen property by public auction. This leads to disproportionately high insurance cost increases, low conviction rates and little or no possibility to prove insurance fraud. On the other hand, second hand dealers are confronted with a high risk to lose stock by confiscation and to get involved in unnecessary problem with law enforcement.

Most valuable components of vehicles, jewellery or household appliances cannot or only with great difficulty be equipped with an electronic or other individual tagging device, which can be distance tracked or otherwise reliably identified by possible non-crimminal buyer or law enforcement.

### THE INVENTION

According to the invention a method of identification of an article includes the steps of introducing or incorporating at least two detectable substances having characteristic spectra which can be identified and/or quantified according to their chemical nature and/or their ratios and/or relative concentrations by suitable spectrographic means, into an article or a material for coating of the article, in a predetermined ratio and/or concentrations.

In this specification the term "spectrographic means" is used in its widest scientific sense and includes such techniques as optical spectroscopy, X-ray spectra, Nuclear Magnetic Resonance, Molecular Spectroscopy and Neutron Energy Dispersive Spectroscopy (NEDS) and electron spin resonance; the two former techniques being preferred for the following reasons:
X-ray spectroscopy allows to identify the K, L and higher spectral lines of every element in the periodic system. Their relative intensities give a very precise and reproducible pattern of their relative concentrations. This is the most versatile method of encoding a chemical label into any substance or any material, and may be reliably read out with a device in visible contact with the object in question.

One preferred form of X-ray spectroscopy uses continuous wave or pulsed X-rays, which may be made monochromatic by the use of secondary targets and filter sets. These allow an optimisation of quantitative resolution by time-synchronous variation of energy and intensity of the produced X-ray beam, allowing to tune into the optimal response of the substance or mixture of substances. Alternatively, by regular flashing, the variation per pulse of the energy range of the produced spectrum of the primary X-ray target, scans over the maximum excitation energies and maximum characteristic resolution of each element to be identified with each pulse or flash.

It has been found that the use of X-ray spectra produced by suitable energising sources as described in my co-pending patent application No. is very simple and accurate and is the preferred form of spectroscopy.

Optical spectroscopy is advantageous for the identification of alkali or earth-alkali metals, because they have very distinct optical spectra in the visible and near-visible range spectra. Spectra can be read out quantitatively by a good light spectrometer.

For the purpose of definite forensic evidence the use of molecular compounds, which are not readily available on the market is preferred, and these can be modified easily with elements attachable to them, which are then identifiable by one or a combination of the spectroscopic methods described earlier.

One of the possible candidates of such molecules are Buckminsterfullerenes or C_{60,} C₇₀, C₇₆, C₈₂ and higher species of carbon-cage molecules. Elements can be attached to their surface or they can be entrapped inside. They have very distinct UV and IR spectra, and, tagged with other elements, can be very versatile in the encoding process of a chemical label using X-ray fluorescence, energy dispersive scattering or electron beam activated energy dispersive X-ray spectroscopy. Another group of candidates comprise metallo organic soaps.

In a particular form of the invention it is proposed to incorporate a sequence of different elements with distinctively different spectral lines in distinct and precisely known concentrations into any host material or to incorporate the sequence into an appropriate coating for an article in question. The nuclear charges of the elements used can determine the order of the readout of the different spectral lines, the intensities of which can determine the value of such readout. For example, the routine of establishing a numerical sequence by chemical labelling could be:
**Step 1:** Choose a sequence of elements, e.g. Na, K, Rb,Cs, Mg, Ca, Sr, Ba, or the lanthanides, some or all of which may be incorporated.
**Step 2:** Choose a second sequence of elements different from the first sequence, e.g. Ti, Mn, Co, Cu, Zn, etc., one of which will be incorporated.
**Step 3:** Define the permutation of the element sequence by allocating one permutation of the sequence shown in step 1 by relating this permutation to the presence of an element of step 2.
**Step 4:** Norm (by definition) the peak length of the concentration of the element of step 2 to a number between 1 and 10, dependent on the type of article-producer. These can be permutated similarly to steps 1 to 3.
**Step 5**: Incorporate concentrations of the elements of step 1 producing peak lengths between 0 and 10 relative to the element concentration of step 4.

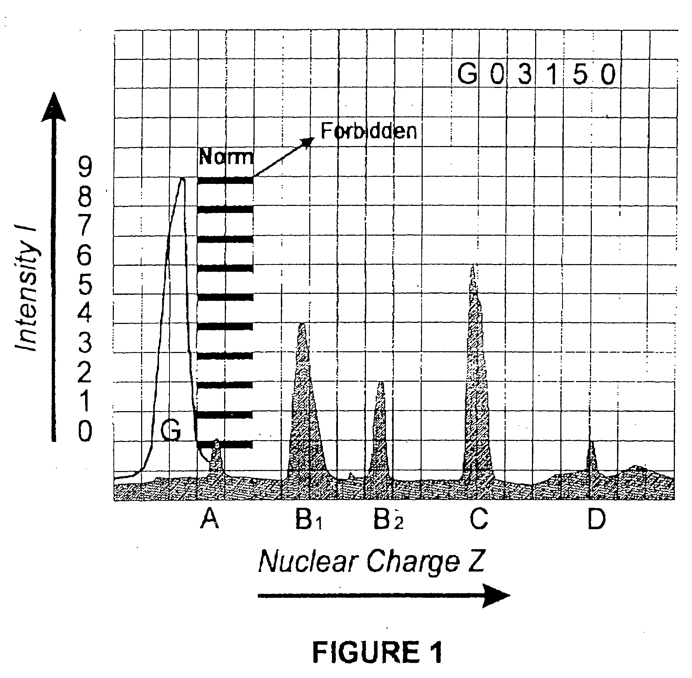

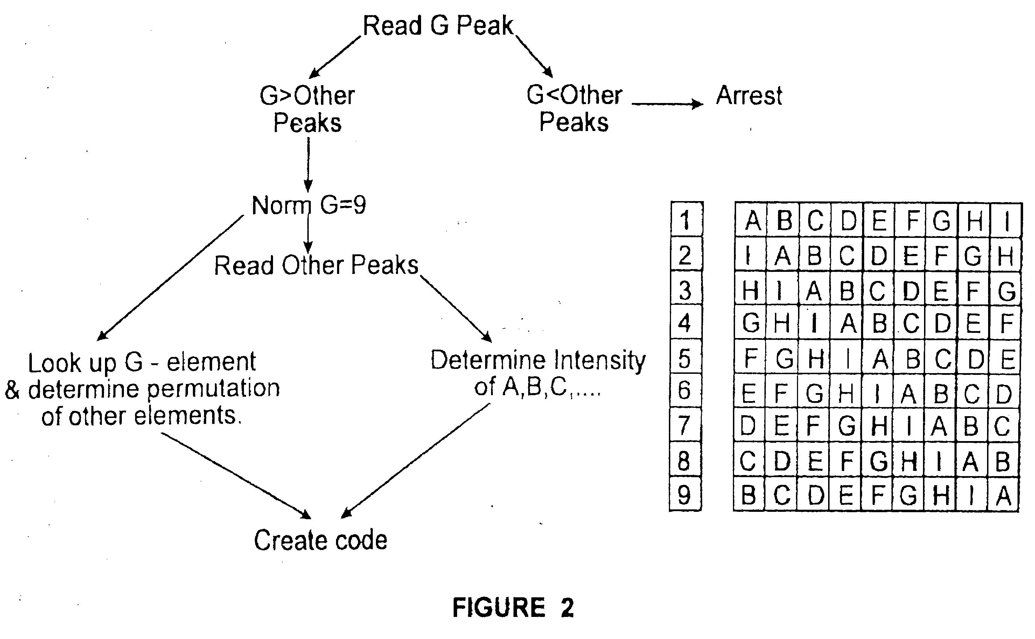

The decoding process looks accordingly similar.
**Step A :** First determine the presence of a step 2 element and define the normation of its concentration according to step 4. All other peaks have to match this normation and may not exceed 10 relative to the normation peak otherwise there will be evidence of tampering with the relative concentrations.
**Step B :** define the permutations according to the element in step 2.
**Step C:** determine the sequence and concentrations of the elements defined in step 1.
**Step D :** Match to the normation of the concentration of a chosen element or element combination of step 2.
**Step E:** Result: Read out a digit sequence individually labelling the article or component in question (ID number). This is exemplified with reference to Figures 1 and 2 in which

Coatings like paints and burn-in coatings and engine oil can be chemically labelled by the admixture of encoding elements mentioned above, provided the chemical reactivity and spectral properties are determined during their production and coating process. The respective concentrations and encoding procedures including out-diffusion process are stored in a central computer, so that the dispatching agent does not know the normation element and its normation value. The individual admixtures are then mixed with the host coating and applied to the article in question. An individual ID number identical or matched number to the stored number is attached to the article by a conventional label or certificate.

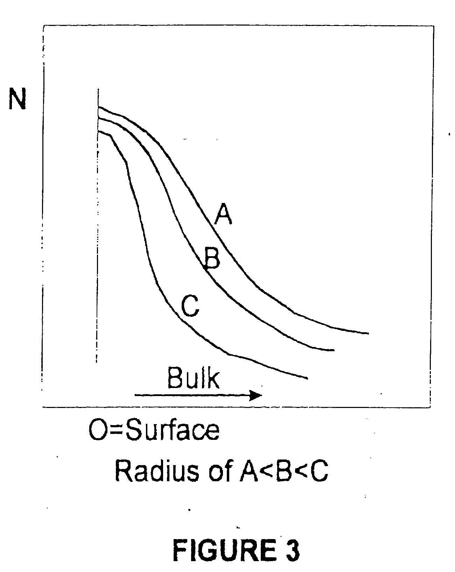

Homogeneous or surface labelling of uncoated articles or components can be done by indiffusion or direct admixture while creating the article. Figure 3 illustrates in diffusion profiles of different elements.

Readout devices will be able to provide the information of the producer name, which will be transmitted to the central computer unit. The spectroscopic means will match the producer spectrum to the producer ID, which will then set the normation byte in the readout device to a number determining the normation of the rest spectrum, which is then transformed into the ID number of the article. This number is then transmitted to the central computer unit, which matches this ID with any stolen or lost article registered in its database. The central computer unit then sends a signal to the readout device on site, whether the article is stolen, lost. In case such registration is not available, the ID number or similar of the rightful owner can be displayed for manual matching on site.

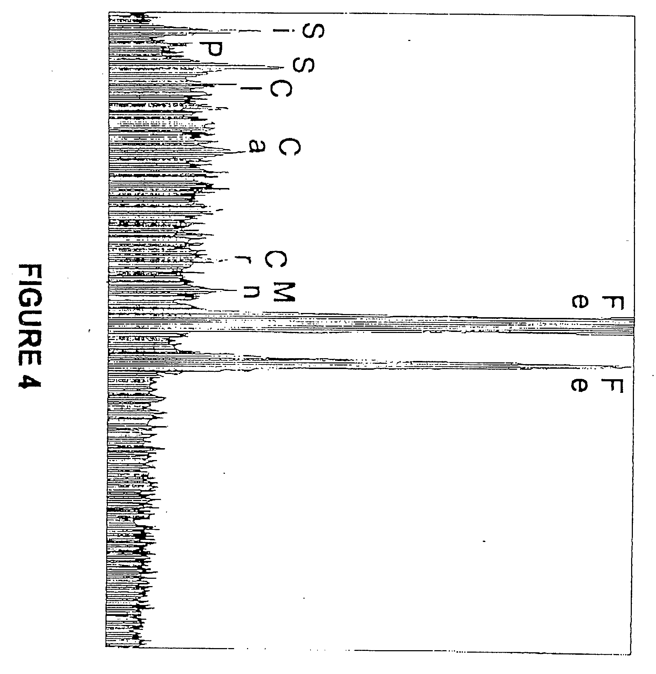

Investigations to date have given positive results for the admixture of alkalifullerene compounds and halogenfullerene compounds into organic coatings. The solubilities of those admixtures must be taken into considerable account for the normation process of the encoding. It has been shown, that chemical encoding as described above is possible and that quantitatively reproducible results are achievable. This is illustrated in Figure 4.

The dosage method and mixing techniques should be automated by the use of precision dispensing machinery, in situ spectroscopy, if possible, otherwise test sampling does the job, and solubility tests have to be made for all possible candidates of admixture substances.

With the right precision of the dispensing technique, this readout technique is able to produce up to three digits per element used as an admixture (see Figure 4). This means, that if one uses 8 elements plus one norming element or compound, one can produce sequences of up to 1,000 values in 40,320 permutations as 24-digit ID numbers.

However it is preferred to operate between 3 and 100 distinct intensity levels to avoid overlaps and fluctuations and measurement errors. In this respect reference to Figure 1 will show by definition certain forbidden gaps relating to intensities which do not correspond with real numbers.

A dispensing and mixing unit is provided using commercially available components. Commercially available clear coats for vehicles are the first target to impregnate with chemical labelling substances. These will be discussed later.

An example of the invention is described below with reference to the accompanying sketches.

Figure 1 is a graph of Intensity against Nuclear Charge is shown for a target having four elements A, B, C and D, the peaks for which are indicated. Also indicated is a peak for a G (gauge) element. A scale of Intensities is shown as NORM and the lines indicate the relative concentrations. Thus, the peak at A only breaks the zero line so that code given for it is zero. The two peaks for element B are at 3 and 1 whole C is at 5 and D at zero. Thus the code for this particular target is G 0 3 1 5 0.

In Figure 2 there is a system of creating a code with reference to the G element.

Figure 3 indicates the depth of indiffusion of the elements A, B and C into the surface on which they are applied.

A typical graph is shown in Figure 4 with the final analysis below giving a code based on iron being the gauge element chosen to represent 9, which is calibrated by means of hardware rather than software maximizing resolution.

For use as chemical labels for motor vehicles, ions of tracer elements into the phosphating suspension; for example a set of ions with variable relative concentrations to each other replacing part of the Zn ions usually used in the phosphating process. If the dipping bath is used, such ion combination could represent year, month and batch numbers of vehicles. If the labelling phosphate solution is sprayed on the body work after the dipping bath, individual codes for vehicles bodies can be implemented.

The advantage of such a treatment of the metal surface is the difficulty to remove such a label that covers the entire surface of the unpainted bodywork, even parts very difficult to reach. The vehicle or other article may have to be stripped completely, the paint totally removed and the metal body etched in acid. Then a complete re-phosphating and re-painting would have to take place, with the risk or remaining remnants of the original, chemical label. Such procedure does not seem in any way viable for criminals.

As the tracer ions may be washed away in the rinsing process after phosphating and labelling, they cannot be re-used for further labelling, since this will falsify any other label. If there is a closed cycle water rinsing appliance, the water has to be demineralised after each vehicle to avoid falsification of the label added to the batch label applied in the dipping bath. A recovering of lost tracers may be costly.

As an alternative, a year/month/batch code can be implemented into the ground coat of the vehicles so that part of the total label is difficult to remove, if the paint is stripped off. In this case, several methods of incorporation of tracers are possible.

For both ground and paint coat, the incorporation of tracer ion combinations can be achieved by addition to the thinner solution of the paint. As a first method, tracer acetate hexahydrates have been successfully transferred into diols (used in e.g. Polyurethane paint) from aqueous solutions by using two phase organic/water systems possessing partial solubility into each other. By a distillation process the water can be removed so that a maximum of less than 1% mol remained. The organic phase forms organometallic compound with the tracers. Gaschromatographic measurements have shown water contents as low as 0.7% mol in the organometallic compound solution, which can be used as a drier component in the paint.

A second, and more secure route of incorporation of tracers into paint, is the reactive incorporation of the chemical label into tracer code soaps. With a solubility of 1g label in 10 ml butanol this method is very suitable for the process. The amount of how much metallic soap is used in compatible paints, for part of it to be replaced by tracer label soap can be determined by trial and error.

An excellent path to incorporate tracer labels resides in a treatment of the engine cooling system with a phosphating suspension, followed by application of corrosion preventing agent, then application of tracer label solution into the first cooling water supplied in an assembly plant. As an additional label the engine may be sprayed with a colourless burn-in laquer containing a combination of tracer concentrations.

The incorporation of tracers into the engine block during the casting process is an excellent method.

The above methods may be applied to differentials, gearboxes, transmissions brake system sand hydraulic systems.

Seats, dashboards and other interior parts made of plastic, fabric or leather can be treated by direct incorporation of tracer labels with an impregnation liquid.

### USE OF LANTHANIDES AS DETECTABLE SUBSTANCES

For the identification of goods a code made up by using Lanthanide salts which are detected by XRF. The lanthanides have the following physical and chemical properties.

**TABLE I**

| Symbol | MR | Valances | Electrical Potential | Merck Index |
|---|---|---|---|---|
| La | 138.9055 | 3 | 2.52 (calc.) | 5193 |
| Pr | 140.9077 | 3 4 | 2.47 (calc) | 7605 |
| Nd | 144.24 | (2?) 3 (4?) | 2.44 (calc) | 6295 |
| Gd | 157.25 | 3 | -2.4 (calc) | 4200 |
| Dy | 162.50 | 3 | N/A | 3467 |
| Yb | 173.04 | 2 3 | N/A | 9916 |

One method of attaching an identification code to any article (car, household article or the like) is by incorporation of the tagging chemical into the passivation coat of the metal (phosphate layer) or into the paint. For the phosphating procedure, ions for the identification can be used instead of zinc.

Typical concentration of a phosphate dipping bath are according to Ullmann vol. A16 page 412
Zn ++1.2 g/l, Ni++ 0.1 g/l, H₃P0 + H₂P0₄ 15g/l and N0₂ 0.1 g/l. The pH is adjusted to 3.2 with sodium hydroxide. The process is usually carried out at a temperature up to 95°C. The following chemicals were used:-
Zn(OH) - 1.83 g/l NiS0₄ - 0.265 g/l H₃P0₄ 15g/1 and NaN0₂ 0.133g. For testing the transfer rate of the lanthanides one adds the salts to the phosphating bath and measures the concentration in the layer with XRF.

For implementing this process into a car production plant the phosphate solution has to sprayed on after the dipping of the car in the phosphate bath. The advantage of this system is the direct treatment of the metal surface and the difficulty to remove the tagging substances from a stolen car. The phosphating solution can not be reused because of possible leaching of lanthanides, and in a closed water process the rinsing water has to be demineralised to avoid the falsification of the number added.

The ions can be added to the thinner or to a portion of the paint (e.g. diols in polyurethane paint). Different solvents have been tested for solubility of the lanthanide acetates at 20°C. The salt was added and the solution heated to boiling, Measurement after cooling showed that the acetate hexahydrates had a molecular weight between 316.04 and 422.24 g/mol.

**TABLE 2**

| Solvent | max. solub. (g/l) |
|---|---|
| Water | 50 |
| Ethanol | 5 |
| Ethyl Acetate | 0 |
| Butyl Acetate | 0 |
| 1,3-Butanediol | 0 |
| n-Butanol | 0 |
| Acetylacetone | 0 |

Further tests for transferring the ions into an organic solvent were carried out. To transfer ions into acetylacetone the sale is dissolved in water and about 2 - 4 times as much volume acetylacetone added to this saturated solution. One part acetylacetone dissolves in about 8 parts of water. The rest forms a two phase system. The denser water separates to the bottom and the acetylacetone can be decanted, forming an organometallic compound with a solubility lower than in water. It is used as a drier in paints. The compatibility has to be checked with the paint manufacturer.

To dissolve salts in butanol one has also to transfer them from an aqueous solution. The polarity of the butanol is too low to break the ion lattice. A saturated aqueous solution is mixed with about 7 to 10 times the volume of butanol. After continuously shaking for about 1 minute the two phase separation disappears and a homogenous phase is formed. The water can then be distilled off. This is preferably done under vacuum below 200 mbar. The vapour is an azeotrope with about 80 mol% of water after distillation of 3 to 4 times the volume of water added can be brought below 1 mol%. The end of the distillation can be seen by an increase of the vapour temperature (at 1.013 bar from 92°C - 118°C.

Preferably the chlorides should be used as they have the highest solubility.

The water content of the butanol - water distillate was measured with a HP 5890 series II gas chromatograph using TDC - detector.

Sample I was taken after 2 hours of distillation in a small still with a primary content of 50 ml. The pressure was 173 mbar and the average flow of condensed vapour was about 10 ml/h.

Sample II underwent an additional hour of distillation after which the area ratio was 0.0076.

Sample III was a calibrated sample with 1 mol% of water in n-butanol. The area ratio was 0.021.
Result: It is established that distillation leads to a water contents well below 1 mol%.

Another very promising way of incorporating the salts into a paint is to react it to a metallic soap, which should be reacted with butyric acid. After evaporation of the surplus of butyric acid at 180°C one obtains a gelatinous precipitate. The product of 1 g neodymium acetate dissolves in 10 ml butanol for about 6 hours. After that time it starts slowly to recrystalise .

## Claims

1. A method of identification of an article including the steps of introducing or incorporating at least two detectable substances having characteristic spectra which can be identified and/or quantified according to their chemical nature and/or their ratios and/or relative concentrations by suitable spectrographic means, into an article or a material for coating of the article, in a predetermined ratio and/or concentrations.

2. The method according to claim 1 in which the identifiable spectra is X-ray spectra.

3. The method according to claim 2 in which the X-ray spectroscopy allows identification of K,L and higher spectral lines of any element.

4. The method according to claim 2 or 3 in which pulsed X-rays are used which are rendered monochromatic by use of secondary targets and filter sets.

5. The method according to claim 2 or claim 3 in which pulsed X-rays are derived by varying the excitation of a primary target, the pulsed X-rays being used to scan over the complete response functions of each element present through the maxima of their resolution functions.

6. The method according to any of the above claims in which the detectable substances are chosen from Buckminsterfullerenes or *C*_{*60*}*, C*_{*70*}*, C*_{*76*}*, C*_{*82*} and higher species of carbon-cage molecules, with one or more elements attached thereto.

7. The method according to any of claims 1 to 6 in which the detectable substances are metallo-organic soaps.

8. The method according to any of the above claims in which the detectable substances are chosen as a sequence of different elements with distinctively different spectral lines in distinct and known concentrations into a host material.

9. The method according to claim 8 in which the host material is a coating composition.

10. The method according to any of the above claims in which a first sequence of elements is chosen and one of a second sequence of elements is mixed therewith.
